# EUROPEAN PATENT APPLICATION

(11) **EP 3 002 809 A1**
(43) Date of publication of application: **06.04.2016**
(21) Application number: 15170373.3
(22) Date of filing: 03.06.2015
(51) Int. Cl.: H01M 8/0612, C01B 3/02, H01M 8/04664, H01M 8/04746

(54) **FUEL CELL SYSTEM**

(30) Priority: 30.09.2014 JP 2014199654
(71) Applicant: AISIN SEIKI KABUSHIKI KAISHA, Kariya-shi, Aichi 448-8650 (JP)
(72) Inventor: Taniguchi, Hiroya, Kariya-shi, Aichi 448-8650 (JP); Sakamoto, Kazunori, Kariya-shi, Aichi 448-8650 (JP)
(74) Representative: TBK

(57) **Abstract**

A fuel cell system includes: a fuel cell (34) generating electricity by using fuel and an oxidant gas; an evaporation section (32) generating steam from reformation water;
a reformation section (33) generating the fuel from a raw reforming material and the steam and feeds the generated fuel to the fuel cell; a reformation water pump (11b1, 40) including a coil (43), a plunger (44), and a cylinder (42a); and a controller (15) controlling at least the reformation water pump.

Vibration is generated in the reformation water pump due to an impact of the plunger on an impacted portion (42a3).

The fuel cell system further includes a vibration detector (50) arranged at a transfer part to which the vibration is transferred, and detecting the vibration,.

The controller includes a check unit for checking an abnormal state of the reformation water pump.

## Description

### TECHNICAL FIELD

This disclosure relates to a fuel cell system.

### BACKGROUND DISCUSSION

JP 2012-133915A (Reference 1) discloses one type of a fuel cell system. As illustrated in Fig. 1 of Reference 1, the fuel cell system includes a motor 82 which drives pumps 80 for carrying water (reformation water) to an evaporation section 2. The water is stored in a tank 4 in order to cause steam reforming to be performed on fuel (raw reforming material).

In the above-described fuel cell system disclosed in Reference 1, generally, a revolution sensor is provided in the motor 82 in order to determine whether or not the pump 80 is driven normally. The revolution sensor detects the number of revolutions of the motor 82 which is used for driving the pump 80. With this, since the number of revolutions which is detected by the revolution sensor decreases when the motor 82 has a problem and the rotational driving of the motor 82 is suspended, the occurrence of abnormality in the motor 82 can be detected. However, when an air space is generated in the pump 80, even though the motor 82 is driven normally, the flow rate of the reformation water may be reduced. In this case, steam is not generated in the evaporation section 2, and the raw reforming material in a reformation section 3 is carbonized (caulking), not steam-reformed. Thus, deterioration of reformation catalyst in the reformation section 3 occurs.

In order to determine whether or not the pump 80 is driven normally, a flow rate sensor for detecting the flow rate of the reformation water, or a pressure sensor for detecting the pressure of the reformation water may be provided on a flow path of the reformation water, instead of the above-described revolution sensor. In this case, the flow rate of the reformation water is incorrectly detected due to the occurrence of an air space in this sensor. Thus, it may be detected that the pump 80 is not driven normally, regardless of normal driving of the motor 82.

### SUMMARY

Thus, a need exists for a fuel cell system which allows reliable checking of an abnormal state of the pump which causes the reformation water to be supplied.

A fuel cell system according to an aspect of this disclosure includes a fuel cell that generates electricity by using fuel and an oxidant gas, an evaporation section that generates steam from reformation water, a reformation section, a reformation water pump, and a controller that controls at least the reformation water pump. The reformation section generates the fuel from a raw reforming material and the steam and feeds the generated fuel to the fuel cell. The reformation water pump includes a coil which is electrified and forms a magnetic field by applying a current, a plunger which moves by the magnetic field which is formed by the coil, and a cylinder which stores the plunger to enable a reciprocating motion and forms a pump room which varies the volume in accordance with the reciprocating motion of the plunger. The reformation water pump causes the reformation water to be supplied to the evaporation section by sucking the reformation water into the pump room through the reciprocating motion of the plunger and discharging the reformation water from the pump room through pressing the plunger. The vibration is generated in the reformation water pump due to an impact of the plunger on an impacted portion when the reciprocating motion of the plunger is performed. The fuel cell system further includes a vibration detector that is arranged at a transfer part to which the vibration is transferred, and detects the vibration. The controller includes a check unit for checking an abnormal state of the reformation water pump based on the amplitude of the vibration which is detected by the vibration detector.

When the reformation water pump operates normally, since the cylinder is filled with the reformation water and there is the reformation water between the plunger and the impacted portion, the reformation water functions as a buffer material in the cylinder. As a result, the amplitude of the vibration due to the impact of the plunger is reduced. If the amount of the reformation water in the cylinder varies due to abnormality of the reformation water pump in comparison to the amount of the reformation water in the cylinder when the reformation water pump operates normally, the amplitude of the vibration due to the impact of the plunger varies. Accordingly, the check unit may check an abnormal state of the reformation water pump based on the amplitude of the vibration which is detected by the vibration detector.

In the fuel cell system according to the aspect of this disclosure, it is preferable that the check unit checks the reformation water pump to have abnormality when the amplitude of the vibration which is detected by the vibration detector is larger than a determination value.

In the fuel cell system according to the aspect of this disclosure, it is preferable that the check unit checks the reformation water pump to have abnormality when the vibration detector does not detect the vibration continuously for a predetermined period of time during a time when the controller controls the reformation water pump to supply the reformation water to the evaporation section.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating an embodiment of a fuel cell system disclosed here;
Fig. 2 is a sectional view of a reformation water pump illustrated in Fig. 1, in an axial direction of the reformation water pump and illustrates a state where a coil is not electrified;
Fig. 3 is a sectional view of the reformation water pump illustrated in Fig. 1, in the axial direction of the reformation water pump and illustrates a state where the coil is electrified;
Fig. 4 is a flowchart of a control program which is executed by a controller illustrated in Fig. 1;
Fig. 5 is a time chart illustrating that the fuel cell system operates through the flowchart of Fig. 4, and illustrates a case where abnormality of the reformation water pump occurs regarding that vibration by an impact of a plunger is not generated; and
Fig. 6 is a time chart illustrating that the fuel cell system operates through the flowchart of Fig. 4, and illustrates a case where abnormality of the reformation water pump occurs regarding that the amplitude of the vibration due to an impact of the plunger becomes larger.

### DETAILED DESCRIPTION

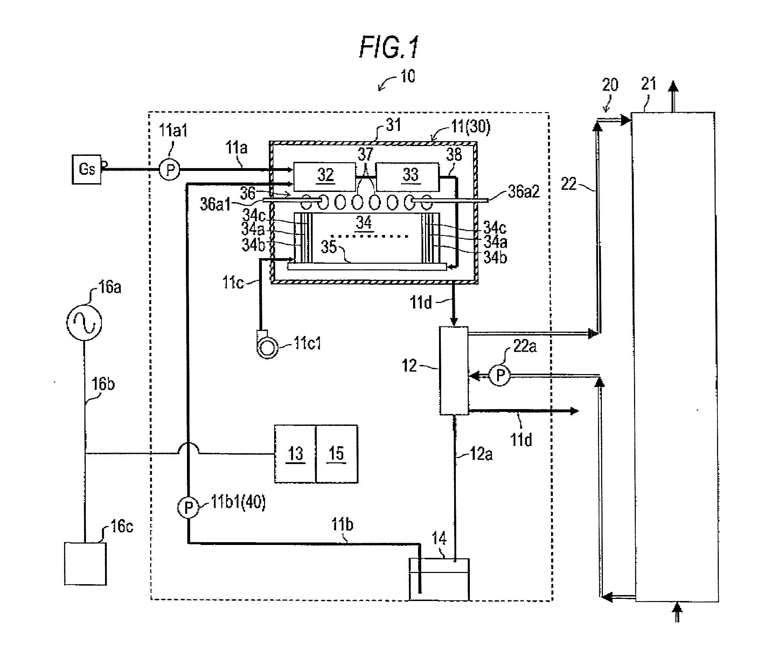

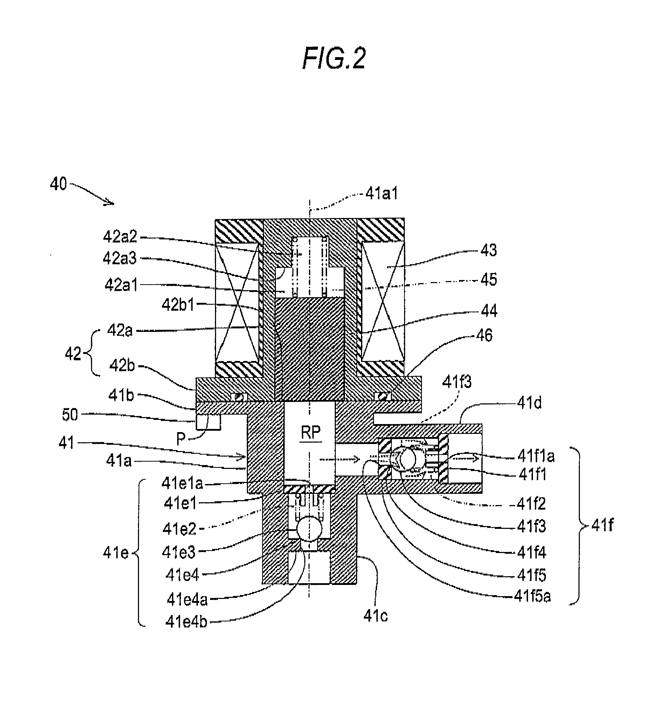

Hereinafter, an embodiment of a fuel cell system disclosed here will be described. In this specification, descriptions will be made by using an upper side and a lower side in Figs. 1 and 2 as an upper part and a lower part of the fuel cell system for a convenient explain. As illustrated in Fig. 1, the fuel cell system includes an electricity generation unit 10 and a hot water storage tank 21. The electricity generation unit 10 includes a fuel cell module 11 (30), a heat exchanger 12, an inverter 13, a water tank 14, and a controller 15.

The fuel cell module 11 is configured by at least a fuel cell 34 which will be described later. A raw reforming material, reformation water, and cathode air are fed to the fuel cell module 11. Specifically, one end of a raw reforming material feed pipe 11a which causes the raw reforming material to be fed is connected to a feed source Gs and another end of the raw reforming material feed pipe 11a is connected to the fuel cell module 11. A raw material pump 11a1 is provided in the raw reforming material feed pipe 11 a. One end of a water feed pipe 11 b which causes the reformation water to be fed is connected to the water tank 14 and another end of the water feed pipe 11 b is connected to the fuel cell module 11. A reformation water pump 11 b1 (40) (which will be described later) is provided in the water feed pipe 11 b. One end of a cathode air feed pipe 11c which causes the cathode air to be fed is connected to a cathode air blower 11c1 and another end of the cathode air feed pipe 11c is connected to the fuel cell module 11.

The heat exchanger 12 is a heat exchanger to which a combustion exhaust gas which is exhausted from the fuel cell module 11 and hot water from the hot water storage tank 21 are supplied and in which heat exchange is performed between the combustion exhaust gas and the hot water. Specifically, the hot water storage tank 21 stores the hot water and a hot water circulation line 22 in which the hot water is circulated (circulated in a direction indicated by arrows in Fig. 1) is connected to the hot water storage tank 21. A hot water circulation pump 22a and the heat exchanger 12 are arranged on the hot water circulation line 22 in order from a lower end of the hot water storage tank 21 to an upper end. An exhaust pipe 11d from the fuel cell module 11 is connected (provided to pass through) to the heat exchanger 12. A condensed water feed pipe 12a which is connected to the water tank 14 is connected to the heat exchanger 12.

In the heat exchanger 12, the combustion exhaust gas from the fuel cell module 11 passes through the exhaust pipe 11d and is introduced into the heat exchanger 12. Heat exchange is performed between the combustion exhaust gas and the hot water, and thus the combustion exhaust gas is condensed and cooled. The condensed combustion exhaust gas passes through the exhaust pipe 11d and then is discharged outwardly. The condensed water passes through the condensed water feed pipe 12a and is supplied to the water tank 14. The water tank 14 causes the condensed water to become pure water by using ion exchange resin.

The heat exchanger 12, the hot water storage tank 21, and the hot water circulation line 22 which are described above, constitute a waste heat recovery system 20. The waste heat recovery system 20 collects and stores waste heat of the fuel cell module 11 in the hot water.

The inverter 13 receives and converts a DC voltage which is output from the fuel cell 34 into a predetermined AC voltage and the converted DC voltage is output to a power line 16b which is connected to an AC system power supply 16a and an external power load 16c (for example, electric appliance). The inverter 13 receives an AC voltage from the system power supply 16a through the power line 16b. The inverter 13 converts the input AC voltage into a predetermined DC voltage, and then outputs the direct current to auxiliary machines (pumps, blower, and the like) or the controller 15. The controller 15 drives the auxiliary machines so as to control an operation of the fuel cell system.

The fuel cell module 11 (30) includes a casing 31, an evaporation section 32, a reformation section 33, and a fuel cell 34. The casing 31 is formed of a heat-insulating material to have a box shape. The evaporation section 32 is heated by combustion gas (which will be described later), evaporates the reformation water which is fed and generates steam. The evaporation section 32 preheats the reforming raw material which is fed. The evaporation section 32 mixes the steam which is generated in this manner with the preheated reforming raw material and feeds mixture to the reformation section 33. Examples of the reforming raw material include reforming gas fuel such as natural gas and LP gas or reforming liquid fuel such as kerosene, gasoline, and methanol. In this embodiment, descriptions will be made by using natural gas as the reforming raw material.

One end of the raw reforming material feed pipe 11a is connected to the feed source Gs and another end of the raw reforming material feed pipe 11a is connected to the evaporation section 32. The feed source Gs is, for example, a gas feed pipe of city gas or a gas cylinder of LP gas. One end of the water feed pipe 11 b is connected to the water tank 14 and another end of the water feed pipe 11 b is connected to the evaporation section 32. The reformation water pump 11 b1 (40) is provided in the water feed pipe 11b.

The reformation water pump 40 includes a first housing 41, a second housing 42, a cylindrical coil 43, a plunger 44, and a spring 45, as illustrated in Fig. 2. The reformation water pump 40 is a plunger pump in which the plunger 44 performs a reciprocating motion by repeating electrification and non-electrification of the coil 43 and thus sucks reformation water (condensed water) from the water tank 14 and supplies the reformation water to the evaporation section 32.

The first housing 41 includes a main body portion 41a, a flange portion 41b, a suction pipe 41c, and a discharge pipe 41d. The main body portion 41a is formed to have a cylindrical shape which is extended in a direction of an axial line 41a1. The flange portion 41 b is formed to protrude along the entire circumference in a circumferential direction of the main body portion 41a based on the axial line 41 a1, at an upper end portion of the main body portion 41a.

The suction pipe 41 c causes the reformation water to be introduced into the main body portion 41a. The suction pipe 41c is cylindrically formed and is arranged in the first housing 41 on the same axis as that of the first housing 41. An upper end of the suction pipe 41c is connected to a lower end of the main body portion 41a. A lower end of the suction pipe 4c is connected to the water feed pipe 11b.

The discharge pipe 41 d discharges the reformation water from the main body portion 41 a. The discharge pipe 41d is cylindrically formed and is arranged so as to pass through a side wall of the main body portion 41a and to be extended in a radial direction of the main body portion 41a. A left side end of the discharge pipe 41 d is connected to the inside of the main body portion 41 a. A right side end of the discharge pipe 41d is connected to the water feed pipe 11 b.

The reformation water pump 40 further includes a first check valve 41e and a second check valve 41f. The first check valve 41e is provided in the suction pipe 41c and the second check valve 41f is provided in the discharge pipe 41d.

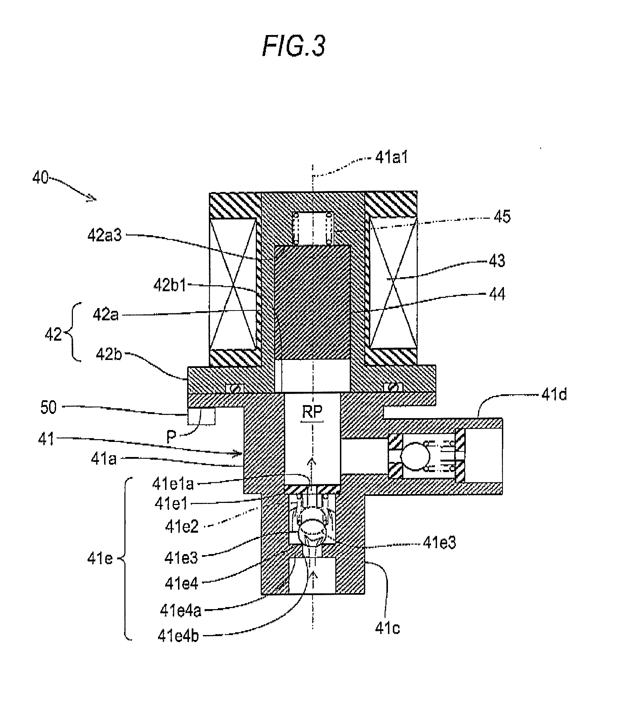

The first check valve 41 e is a valve which allows the reformation water to flow from the water feed pipe 11 b into the main body portion 41 a, but limits a reverse flow of the reformation water. The first check valve 41 e is configured from a first support plate 41e1 in which a through hole 41e1a which allows the reformation water to flow is formed, a first spring 41e2 which is supported by the first support plate 41 e1, and a spherical first valve body 41e3 which is biased by the first spring 41e2, and a first valve seat 41e4 in order from the upper end side of the suction pipe 41c. The first valve seat 41e4 is formed on an upper side of the through hole 41e4b which is formed in the partition wall 41e4a, as an opening edge. The first support plate 41e1 is fixed into the suction pipe 41c by press fitting, The first check valve 41 e has two states of a "closed state" (indicated by solid lines in Figs. 2 and 3) and an "opened state" (indicated by dotted lines in Fig. 3). In the "closed state", the first valve body 41e3 and the first valve seat 41e4 abut on each other and thus a flow of the reformation water is limited. In the "opened state", the first valve body 41e3 and the first valve seat 41e4 are separated from each other and thus a flow of the reformation water is allowable.

The second check valve 41f is a valve which allows the reformation water to flow from the main body portion 41a into the water feed pipe 11b, but limits reverse flow of the reformation water. The second check valve 41f is configured from a second support plate 41f1 in which a through hole 41f1a which allows the reformation water to flow is formed, a second spring 41f2 which is supported by the second support plate 41f1, and a spherical second valve body 41f3 which is biased by the second spring 41f2, and a second valve seat 41f4 in an order from the right end side of the discharge pipe 41d. The second valve seat 41f4 is formed on a right side of a through hole 41f5a which is formed in a plate member 41f5, as an opening edge. The second support plate 41f1 and the plate member 41f5 are fixed into the discharge pipe 41d by press fitting, for example. The second check valve 41f has two states of a "closed state" (indicated by a solid line) and an "opened state" (indicated by dotted lines). In the "closed state", the second valve body 41f3 and the second valve seat 41f4 abut on each other and thus a flow of the reformation water is limited. In the "opened state", the second valve body 41f3 and the second valve seat 41f4 are separated from each other and thus a flow of the reformation water is allowable.

The second housing 42 includes a cylinder 42a and a flange portion 42b which is formed at a lower end portion of the cylinder 42a so as to protrude along the entire circumference in a circumferential direction of the axial line 41a1. The second housing 42 is arranged such that a lower end surface of the flange portion 42b comes into contact with an upper end surface of the flange portion 41b of the first housing 41 and thus covers an upper end of the first housing 41. The second housing 42 is fixed to the first housing 41 by using mounting bolts (not illustrated).

The cylinder 42a stores the plunger 44 such that the plunger 44 is allowed to perform the reciprocating motion in the direction of the axial line 41a1. The cylinder 42a is formed to have a bottomed cylindrical shape which has the same axis as the axial line 41a1 and a lower end which is open toward the main body portion 41a. In the cylinder 42a, a large diameter portion 42a1 which stores the plunger 44, and a small diameter portion 42a2 which is formed on an upper part of the large diameter portion 42a1 and has a smaller diameter than the large diameter portion 42a1 are formed. The large diameter portion 42a1 and the small diameter portion 42a2 form a first contact portion 42a3 which has a step shape and is allowed to be brought into contact with an upper end surface of the plunger 44. The large diameter portion 42a1 is formed to have a greater diameter than the inner diameter of the main body portion 41a. Thus, a second contact portion 41b1 which has a step shape and allows a lower end surface of the plunger 44 to be brought into contact with an upper end surface of the first housing 41 (flange portion 41 b) is formed.

The coil 43 is obtained by cylindrically winding a conductive wire. The coil 43 is arranged around the cylinder 42a so as to have the same axis as the cylinder 42a. The coil 43 is arranged such that an upper end portion of the plunger 44 from the center portion thereof is buried in the coil 43. The coil 43 forms a magnetic field through electrification.

The plunger 44 is formed to be columnar and is arranged to have the same axis as the first housing 41 and to enable sliding in the cylinder 42a. The plunger 44 and the cylinder 42a are formed such that the inner circumferential surface of the cylinder 42a and the outer circumferential surface of the plunger 44 come into contact with each other so as to enable sliding. The upper end surface of the plunger 44 is arranged so as to be allowed to be brought into contact with the first contact portion 42a3 of the cylinder 42a (see Fig. 3). The lower end surface of the plunger 44 is arranged so as to be allowed to be brought into contact with the second contact portion 41b1 of the first housing 41 (see Fig. 2).

The spring 45 is arranged between the upper end surface of the cylinder 42a and the upper end surface of the plunger 44 in the cylinder 42a. The spring 45 causes the plunger 44 to be biased to the first housing 41 side. The reformation water pump 40 further includes a seal member 46 which is used for preventing leakage of the reformation water from a space between the first housing 41 and the second housing 42. The seal member 46 is formed of an elastic material (for example, NBR) to have an annular shape.

The reformation water pump 40 includes a pump room PR. The pump room PR is formed between the first valve seat 41e4 of the first check valve 41e and the second valve seat 41f4 of the second check valve 41f. The pump room PR is a space formed by the partition wall 41e4a, the suction pipe 41c, the main body portion 41a, the cylinder 42a, the plunger 44, the discharge pipe 41d, and the plate member 41f5. The volume of the pump room PR varies depending on the reciprocating motion of the plunger 44, as illustrated in Figs. 2 and 3.

Next, an operation of the reformation water pump 40 in a state where the coil 43 is not electrified will be described. When the coil 43 is not electrified, the plunger 44 is positioned at the lower end portion of the cylinder 42a by biasing of the spring 45, as illustrated in Fig. 2. Specifically, the position of the plunger 44 corresponds to a position at which the lower end surface of the plunger 44 is brought into contact with the second contact portion 41 b1. The valve body 41e3 abuts on the valve seat 41e4 and the valve body 41f3 abuts on the valve seat 41f4. That is, both of the check valves 41 e and 41f are in the "closed state".

In such a state, when the coil 43 becomes electrified, the plunger 44 is attracted toward the upper part of the cylinder 42a by the magnetic field which is formed by the coil 43. The plunger 44 moves to the upper part of the cylinder 42a in the cylinder 42a against the biasing force of the spring 45. The upper end surface of the plunger 44 has an impact on the first contact portion (corresponding to the impacted portion in the appended claims) 42a3 and thus the plunger 44 is positioned in a state where the plunger 44 comes into contact with the first contact portion 42a3, as illustrated in Fig. 3. At this time, vibration is generated due to this impact and the generated vibration is transferred to the entirety of the second housing 42 and the entirety of the first housing 41. In this case, the volume of the pump room PR increases. Since the pressure in the pump room PR is lowered by an increase of the volume of the pump room PR, the first valve body 41e3 of the first check valve 41e moves upwardly against the biasing force of the first spring 41e2. Accordingly, the first check valve 41e changes to the "opened state" and thus the reformation water flows into the pump room PR from the suction pipe 41c (indicated by dotted line arrows). At this time, the second check valve 41f still remains in the "closed state".

When electrification of the coil 43 is stopped, the magnetic field which has been formed by the coil 43 disappears. Thus, the plunger 44 moves downwardly in the cylinder 42a by the biasing force of the spring 45. The lower end surface of the plunger 44 has an impact on the second contact portion (corresponding to the impacted portion in the appended claims) 41b1 and thus the plunger 44 is positioned in a state where the plunger 44 comes into contact with the second contact portion 41 b1, as illustrated in Fig. 2. At this time, vibration is generated due to this impact and the generated vibration is transferred to the entirety of the second housing 42 and the entirety of the first housing 41. In this case, the volume of the pump room PR decreases, and thereby the reformation water in the pump room PR is pressed and the pressure in the pump room PR rises. Thus, the second valve body 41f3 of the second check valve 41f moves in a rightward direction against the biasing force of the second spring 41f2. Accordingly, the second check valve 41f changes to the "opened state" and thus the reformation water is discharged from the pump room PR through the through hole 41f1a. At this time, the first check valve 41e still remains in the "opened state".

In this manner, the plunger 44 performs the reciprocating motion by repeating electrification and non-electrification of the coil 43, and thus the reformation water flows into the pump room PR from the suction pipe 41c and is discharged from the pump room PR to the discharge pipe 41 d through the through hole 41f1a.

An amount of the reformation water which is discharged from the discharge pipe 41 d when the plunger 44 performs the reciprocating motion once corresponds to an amount of varying of the volume of the pump room PR. Thus, the flow rate (flow amount per unit of time) of the reformation water which is discharged from the discharge pipe 41d is determined by using the number of the plunger 44 performing of the reciprocating motion per unit of time. Accordingly, the flow rate of the reformation water is adjusted by adjusting the number of the plunger 44 performing the reciprocating motion per unit of time (frequency).

Specifically, the controller 15 adjusts the number of repeating of electrification and non-electrification (frequency) of the coil 43 per unit of time. The reformation water pump 40 is driven by PWM control of the controller 15. The controller 15 outputs a control command value of the reformation water pump 40 to a driver circuit (not illustrated) of the reformation water pump 40 at a duty ratio by the PWM control. That is, the controller 15 adjusts the duty ratio and thus the number (frequency) of repetitions of electrification and non-electrification of the coil 43 per unit of time and the flow rate of the reformation water are adjusted. A target flow rate of the reformation water is preset based on the quantity of electricity generated in the fuel cell 34 and is stored in the controller 15. The flow rate of the reformation water is set to be in a range of 0.3 to 30 mL/min.

The fuel cell system further includes a vibration detector 50. The vibration detector 50 is arranged at the transfer part P to which vibration generated due to an impact of the plunger 44 is transferred and detects the vibration generated due to the impact of the plunger 44 when the plunger 44 performs the reciprocating motion. As described above, the vibration generated due to the impact of the plunger 44 is transferred to the entirety of the housings 41 and 42. In this embodiment, the transfer part P is an outer face surface of the flange portion 41b of the first housing 41. The vibration detector 50 may be an acceleration sensor and detect acceleration of the vibration. The vibration detector 50 may be a capacitive type acceleration sensor, for example. The vibration detector 50 is electrically connected to the controller 15 and thus a detected value which is obtained by the vibration detector 50 performing detection is transmitted to the controller 15. The controller 15 performs frequency analysis through FFT based on the detected value which is transmitted by the vibration detector 50 and calculates the amplitude of the vibration for each frequency. The controller 15 sets the maximum value among the amplitude of the vibration for frequency, as a vibration detection value Vr.

The configuration of the fuel cell system will be described continuously with reference to Fig. 1.

The reformation section 33 is heated by combustion gas (which will be described later) so as to receive the heat necessary for a steam reforming reaction, and thus generates and obtains a reformed gas from a gas mixture (raw reforming material and steam) which is fed from the evaporation section 32. The reformation section 33 is filled with a catalyst (for example, Ru-based catalyst or Ni-based catalyst). The gas mixture is reacted and reformed by the catalyst and thus a gas containing hydrogen gas, carbon monoxide, and the like is generated (so-called steam reforming reaction). The reformed gas contains hydrogen, carbon monoxide, carbon dioxide, steam, unreformed natural gas (methane gas), and reformation water (steam) which is not used in reforming. In this manner, the reformation section 33 generates the reformed gas (fuel) from the reforming raw material (raw fuel) and the reformation water and feeds the generated reformed gas to the fuel cell 34. The steam reforming reaction is an endothermic reaction.

The fuel cell 34 is configured in such a manner that a plurality of cells 34a are stacked and the cell includes a fuel electrode, an air electrode (oxidant electrode), and an electrolyte which is interposed between both of the electrodes. The fuel cell 34 in this embodiment may be a solid oxide fuel cell and use zirconium oxide which is one type of solid oxide, as the electrolyte. Hydrogen, carbon monoxide, methane gas, and the like are fed to the fuel electrode of the fuel cell 34, as the fuel.

A fuel flow path 34b in which the reformed gas (fuel) flows is formed on the fuel electrode side of the cell 34a. An air flow path 34c in which the air (cathode air) (oxidant gas) flows is formed on the air electrode side of the cell 34a.

The fuel cell 34 is provided on a manifold 35. The reformed gas is fed to the manifold 35 from the reformation section 33 through a reformed gas feed pipe 38. The fuel flow path 34b has a lower end (one end) which is connected to a fuel outlet of the manifold 35, and the reformed gas output from the fuel outlet is introduced from the lower end and is output from an upper end. The cathode air which is delivered by the cathode air blower 11c1 is fed through the cathode air feed pipe 11c, and is introduced from a lower end of the air flow path 34c and is output from an upper end thereof.

A combusting section 36 is provided between the fuel cell 34, and the evaporation section 32 and the reformation section 33. The combusting section 36 combusts an anode off gas (fuel off gas) from the fuel cell 34 and a cathode off gas (oxidant off gas) from the fuel cell 34, and thereby heats the evaporation section 32 and the reformation section 33.

In the combusting section 36, the combustion gas (flame 37) is generated by combusting the anode off gas. In the combusting section 36, the anode off gas is combusted and thereby the combustion exhaust gas thereof is generated. A pair of ignition heaters 36a1 and 36a2 is provided in the combusting section 36 in order to ignite the anode off gas.

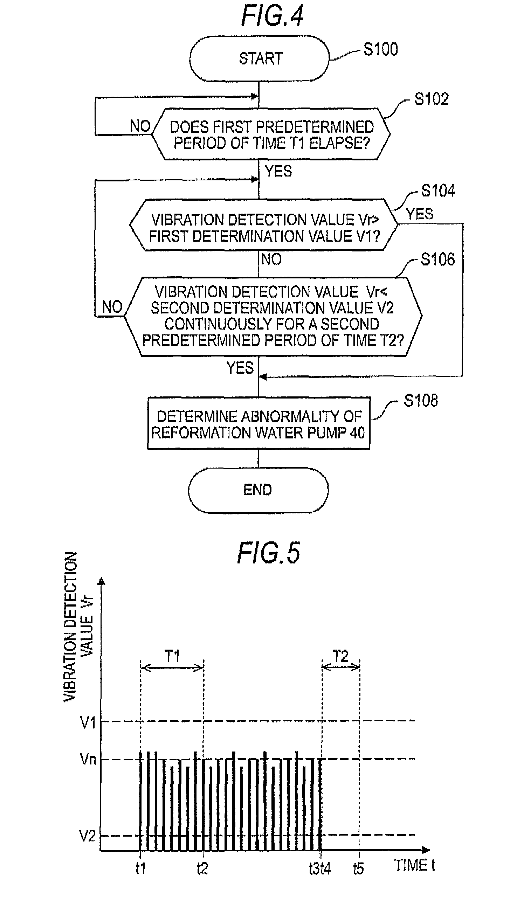

Next, check control will be described using a flowchart illustrated in Fig. 4. The check control means that the controller 15 checks an abnormal state of the reformation water pump 40. The controller 15 executes processes of the flowchart illustrated in Fig. 4 when driving of the reformation water pump 40 is started. In Step S102, the controller 15 determines whether or not a first predetermined period of time T1 elapses from when driving of the reformation water pump 40 is started. The first predetermined period of time T1 is a period of time (for example, 5 seconds) from when driving of the reformation water pump 40 is started until the flow rate (flow amount per unit of time) of the reformation water becomes stable. When the first predetermined period of time T1 does not elapse, the controller 15 repeats determination of "NO" in Step S102. When the first predetermined period of time T1 elapses, the controller 15 determines "YES" in Step S102 and causes a program to proceed to Step S104.

The controller 15 (check unit) checks the presence or absence of the abnormality in the reformation water pump 40 in Step S104. based on the vibration detection value Vr. Specifically, the controller 15 determines whether or not the vibration detection value Vr is greater than a first determination value V1 (corresponding to the determination value in the appended claims). The first determination value V1 is set to a vibration detection value Vr which is greater than a normal vibration detection value Vn. The normal vibration detection value Vn is a vibration detection value Vr when the reformation water pump 40 operates normally. The reason for enabling checking of the abnormal state of the reformation water pump 40 will be described based on the vibration detection value Vr. When the reformation water pump 40 discharges the reformation water normally, an amount of the reformation water in the cylinder 42a is relatively large. In this case, since there is the reformation water between the plunger 44 and the first contact portion 42a3, and between the plunger 44 and the second contact portion 41b1, the reformation water functions as a buffer material for an impact by the plunger 44. Thus, in this case, the vibration detection value Vr of vibration which is generated by the impact of the plunger 44 is reduced in comparison to a case where the amount of the reformation water in the cylinder 42a is relatively small. That is, the normal vibration detection value Vn is less than the vibration detection value Vr when the amount of the reformation water in the cylinder 42a is relatively small. For example, when abnormality of the reformation water pump 40 occurs due to foreign substances clogging the through hole 41e4b, that is, it is impossible to suck the reformation water into the cylinder 42a, since the amount of the reformation water in the cylinder 42a is relatively small, the vibration detection value Vr at this time is greater than the normal vibration detection value Vn. When the vibration detection value Vr is greater than the first determination value V1, it can be determined that the amount of the reformation water in the reformation water pump 40 becomes relatively small, that is, abnormality occurs. The first determination value V1 and the normal vibration detection value Vn are measured in advance through an experiment and the like and are stored in the controller 15.

When the vibration detection value Vr is greater than the first determination value V1, the controller 15 determines that the amount of the reformation water in the cylinder 42a is relatively reduced (determination of "YES" in Step S104), and checks the occurrence of abnormality of the reformation water pump 40 (Step S108). The abnormality of the reformation water pump 40 in this case means the occurrence of an air space in the cylinder 42a, or a state where it is impossible to suck the reformation water into the cylinder 42a due to foreign substances clogging the through hole 41e4b, for example. When the occurrence of abnormality in the reformation water pump 40 is checked, the controller 15, for example, suspends an operation of the fuel cell system.

When the vibration detection value Vr is equal to or less than the first determination value V1, the controller 15 determines "NO" in Step S104 and causes the program to proceed to Step S106.

The controller 15 (check unit) checks the abnormal state of the reformation water pump 40 based on the vibration detection value Vr, in Step S106. Specifically, the controller 15 determines whether or not the vibration detection value Vr is less than a second determination value V2 continuously for a second predetermined period of time (corresponding to the predetermined time in the appended claims) T2. The second predetermined period of time T2 is set to a period of time (for example, a period of five times a cycle of a duty signal) which is longer than the cycle of the duty signal which is output to the reformation water pump 40. The second determination value V2 is set to a vibration detection value Vr which is sufficiently less than the first determination value V1 and the normal vibration detection value Vn, and is greater than zero. The second determination value V2 is measured in advance through an experiment and the like and is stored in the controller 15. For example, when a state (for example, a fixed state) where it is impossible for the plunger 44 to operate due to disconnection in the coil 43 or contamination of foreign substances in the cylinder 42a occurs, that is, abnormality of the reformation water pump 40 occurs, vibration by the impact of the plunger 44 is not generated. Thus, when the vibration detection value Vr is less than the second determination value V2 continuously for the second predetermined period of time T2, the controller 15 determines the occurrence of abnormality of the reformation water pump 40, that is, non-operation of the plunger 44 (determination of "YES" in Step S106), and checks the occurrence of abnormality in the reformation water pump 40 (Step S108).

When the reformation water pump 40 operates normally, vibration is generated by the impact of the plunger 44. Thus, when the vibration detection value Vr is equal to or greater than the second determination value V2, the controller 15 determines that the reformation water pump 40 operates normally, based on generation of vibration which results from a normal operation of the reformation water pump 40 (determination of "NO" in Step S106). The controller 15 causes the program to return to Step S104. In this manner, when the reformation water pump 40 operates normally, the controller 15 repeats determinations in Steps S104 and Step S106.

Next, an operation of the fuel cell system when the occurrence of abnormality in the reformation water pump 40 is checked will be described using the above-described flowchart. First, a case where disconnection in the coil 43 occurs during a time when the reformation water pump 40 is driven will be described using a time chart illustrated in Fig. 5.

The controller 15 starts control of the reformation water pump 40 (time point t1) such that the flow rate of the reformation water becomes a predetermined flow rate. At this time, the vibration detection value Vr is detected due to the impact of the plunger 44. Since the plunger 44 performs the reciprocating motion at the same cycle as the cycle of the duty signal, the vibration detection value Vr is detected at the same cycle as the cycle of the duty signal. When the reformation water pump 40 operates normally, the flow rate of the reformation water maintains the predetermined flow rate at a time (time point t2: Step S102) when the first predetermined period of time T1 elapses. In this case, since the size of the vibration detection value Vr is reduced in accordance with the predetermined flow rate, the vibration detection value Vr is changed to the normal vibration detection value Vn.

When the reformation water pump 40 operates normally, if disconnection in the coil 43 occurs (time point t3), since the magnetic field by the coil 43 is not generated, the plunger 44 is positioned in a state of coming into contact with the second contact portion 41b1. Thereby, the impact of the plunger 44 does not occur, and thus the vibration detection value Vr is less than the second determination value V2 (time point t4). When the vibration detection value Vr is less than the second determination value V2 continuously for the second predetermined period of time T2 (time point t5; Step S106), the controller 15 checks the occurrence of abnormality in the reformation water pump 40 (Step S108) and suspends an operation of the fuel cell system.

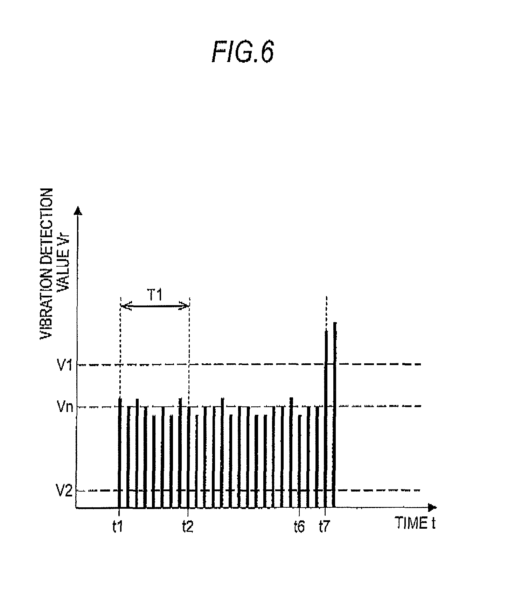

A case where the air space occurs in the cylinder 42a and the amount of the reformation water in the cylinder 42a is relatively reduced during a time when the reformation water pump 40 is driven will be described using a time chart illustrated in Fig. 6.

Similarly to the time chart illustrated in Fig. 5, when the controller 15 starts driving of the reformation water pump 40 (time point t1) and the reformation water pump 40 operates normally, the flow rate of the reformation water becomes the predetermined flow rate at a time (time point t2; Step S102) when the first predetermined period of time T1 elapses. In this case, since the size of the vibration detection value Vr is reduced in accordance with the predetermined flow rate, the vibration detection value Vr is changed to the normal vibration detection value Vn.

When the reformation water pump 40 operates normally, when the air space occurs in the cylinder 42a (time point t6) and the amount of the reformation water in the cylinder 42a is relatively reduced, since the reformation water does not function as the buffer material for the impact of the plunger 44, the vibration detection value Vr increases. When the vibration detection value Vr is greater than the first determination value V1 (time point t7; Step S104). the controller 15 checks the occurrence of abnormality in the reformation water pump 40 (Step S108) and suspends an operation of the fuel cell system.

According to this embodiment, the fuel cell system includes the fuel cell 34 that generates electricity by using fuel and an oxidant gas, the evaporation section 32 that generates steam from reformation water, the reformation section 33, the reformation water pump 40, and the controller 15 that controls at least the reformation water pump 40. The reformation section 33 generates the fuel from a raw reforming material and the steam and feeds the generated fuel to the fuel cell 34. The reformation water pump 40 includes the coil 43 which is electrified and forms a magnetic field by applying a current, the plunger 44 which moves by the magnetic field which is formed by the coil 43, and the cylinder 42a which stores the plunger 44 to enable a reciprocating motion and forms a pump room PR which varies a volume in accordance with the reciprocating motion of the plunger 44. The reformation water pump 40 causes the reformation water to be supplied to the evaporation section 32 by sucking the reformation water into the pump room PR through the reciprocating motion of the plunger 44 and discharging the reformation water from the pump room PR through pressing the plunger 44. The vibration is generated in the reformation water pump 40 due to an impact of the plunger 44 on the first contact portion 42a3 and the second contact portion 41b1 when the reciprocating motion of the plunger 44 is performed. The fuel cell system further includes the vibration detector 50 that is arranged at the transfer part P to which the vibration is transferred, and detects the vibration. The controller 15 includes a check unit (Steps S104 and S106) for checking the abnormal state of the reformation water pump 40 based on the vibration detection value Vr which is detected by the vibration detector 50.

When the reformation water pump 40 operates normally, since the pump room PR is filled with the reformation water and there is the reformation water between the plunger 44 and the first contact portion 42a3, and between the plunger 44 and the second contact portion 41b1, the reformation water in the cylinder 42a functions as the buffer material. As a result, the vibration detection value Vr by the impact of the plunger 44 is reduced. When the amount of the reformation water in the cylinder 42a is changed due to abnormality of the reformation water pump 40 in comparison to that when the reformation water pump 40 operates normally, the vibration detection value Vr is changed by the impact of the plunger 44. Thus, the check unit may check the abnormal state of the reformation water pump 40 based on the vibration detection value Vr which is detected by the vibration detector 50. When abnormality of the reformation water pump 40 is checked, countermeasures, for example, suspension of an operation of the fuel cell system may be performed.

For example, when the air space occurs in the cylinder 42a and the amount of the reformation water in the cylinder 42a is relatively reduced in comparison of a case where the reformation water pump 40 operates normally, since the amount of the reformation water in the cylinder 42a is small, the vibration detection value Vr by the impact of the plunger 44 increases. In this case, the check unit may check the occurrence of abnormality in the reformation water pump 40, for example, by determining the occurrence of the air space in the cylinder 42a based on the vibration detection value Vr which is detected by the vibration detector 50. For example, when the plunger 44 does not perform the reciprocating motion due to disconnection of the coil 43, the impact of the plunger 44 does not occur. Thus, since vibration by the impact of the plunger 44 is not generated, the vibration detection value Vr is not detected. In this case, the check unit may check the occurrence of abnormality in the reformation water pump 40 by determining that the plunger 44 does not operate based on the vibration detection value Vr which is detected by the vibration detector 50.

In the related art in which the number of revolutions of a motor is detected and thus an abnormal state of a reformation water pump is checked, it is impossible to check the abnormal state of the reformation water pump 40 regarding the occurrence of the air space in the cylinder 42a. On the contrary, the check unit of the controller 15 can also check the abnormal state of the reformation water pump 40 regarding the occurrence of the air space in the cylinder 42a, as described above.

In a pump and a motor (which drives the pump) which constitute the reformation water pump in the related art, since the motor is a DC motor or a stepping motor, the number of components of the motor, and the number of components of the reformation water pump are relatively great. On the contrary, since the reformation water pump 40 in this embodiment is a plunger pump, it is possible to reduce the number of components compared to a case of combining the pump and the motor in the related art. Thus, it is possible to reduce the cost in the reformation water pump 40.

Since the vibration detector 50 is arranged so as not to come into contact with the reformation water, it is possible to suppress contamination of the reformation water or the occurrence of the air space in the reformation water pump 40, compared to a case where the vibration detector 50 is arranged on the flow path of the reformation water so as to come into contact with the reformation water.

When the vibration detection value Vr which is detected by the vibration detector 50 regarding vibration by the impact of the plunger 44 is greater than the first determination value V1, the check unit checks the occurrence of abnormality in the reformation water pump 40.

According to this configuration, the check unit can much more reliably check abnormality of the reformation water pump 40 such as an increase of the vibration detection value Vr due to the occurrence of the air space in the cylinder 42a of the reformation water pump 40, or a state where it is impossible to suck the reformation water into the cylinder 42a due to foreign substances clogging the through hole 41e4b, for example.

When the controller 15 controls the reformation water pump 40 to feed the reformation water to the evaporation section, if the vibration detection value Vr which is detected by the vibration detector 50 is less than the second determination value V2 continuously for the second predetermined period of time T2, the check unit checks the occurrence of abnormality in the reformation water pump 40.

According to this, the check unit can more reliably check abnormality of the reformation water pump 40 regarding that the vibration detection value Vr of vibration due to the impact of the plunger 44 is not generated, since the reformation water pump 40 is in a state (fixed state) where the plunger 44 does not operate due to, for example, disconnection of the coil 43 or clogging of foreign substances in the cylinder 42a.

In the above-described embodiment, an example of the fuel cell system is described. However, this disclosure is not limited to the embodiment and other components may be employed. For example, in the flowchart illustrated in Fig. 5, when the vibration detection value Vr is greater than the first determination value V1, the controller 15 determines "YES" in Step S104 and directly checks abnormality of the reformation water pump 40. However, instead of such a process, when the vibration detection value Vr is greater than the first determination value V1 continuously for the second predetermined period of time T2, the controller 15 may determine "YES" in Step S104.

In the above-described embodiment, the vibration detector 50 is arranged on the outer face surface of the flange portion 41b of the first housing 41. However, instead of such a disposition, the vibration detector 50 may be arranged on a side surface of the main body portion 41 a of the first housing 41 or on an upper surface of the second housing 42.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

A fuel cell system includes: a fuel cell (34) generating electricity by using fuel and an oxidant gas; an evaporation section (32) generating steam from reformation water;
a reformation section (33) generating the fuel from a raw reforming material and the steam and feeds the generated fuel to the fuel cell; a reformation water pump (11b1, 40) including a coil (43), a plunger (44), and a cylinder (42a); and a controller (15) controlling at least the reformation water pump.

Vibration is generated in the reformation water pump due to an impact of the plunger on an impacted portion (42a3).

The fuel cell system further includes a vibration detector (50) arranged at a transfer part to which the vibration is transferred, and detecting the vibration.

The controller includes a check unit for checking an abnormal state of the reformation water pump.

## Claims

1. A fuel cell system comprising:
a fuel cell (34) that generates electricity by using fuel and an oxidant gas;
an evaporation section (32) that generates steam from reformation water;
a reformation section (33) that generates the fuel from a raw reforming material and the steam and feeds the generated fuel to the fuel cell;
a reformation water pump (11b1, 40) which includes a coil (43) which is electrified and forms a magnetic field by applying a current, a plunger (44) which moves by the magnetic field which is formed by the coil, and a cylinder (42a) which stores the plunger to enable a reciprocating motion and forms a pump room (PR) which varies a volume in accordance with the reciprocating motion of the plunger, and that causes the reformation water to be supplied to the evaporation section by sucking the reformation water to the pump room through the reciprocating motion of the plunger and discharging the reformation water from the pump room through pressing the plunger; and
a controller (15) that controls at least the reformation water pump,
wherein vibration is generated in the reformation water pump due to an impact of the plunger on an impacted portion (42a3) when the reciprocating motion of the plunger is performed,
the fuel cell system further includes a vibration detector (50) that is arranged at a transfer part to which the vibration is transferred, and detects the vibration, and
the controller includes a check unit for checking an abnormal state of the reformation water pump based on the amplitude of the vibration which is detected by the vibration detector.

2. The fuel cell system according to claim 1, wherein
the check unit checks the reformation water pump to have abnormality when the amplitude of the vibration which is detected by the vibration detector is larger than a determination value.

3. The fuel cell system according to claim 1 or 2, wherein
the check unit checks the reformation water pump to have abnormality when the vibration detector does not detect the vibration continuously for a predetermined period of time during a time when the controller controls the reformation water pump to supply the reformation water to the evaporation section.
